# EUROPÄISCHE PATENTSCHRIFT

(11) **EP 2 846 956 B1**
(45) Veröffentlichungstag und Bekanntmachung des Hinweises auf die Patenterteilung: **29.06.2016**
(21) Anmeldenummer: 13704094.5
(22) Anmeldetag: 12.02.2013
(51) Int. Cl.: B23K 26/00, B23K 26/06, B23K 26/36, B24B 1/00, B41C 1/05, F16C 41/00, F16C 33/64

(54) **VERFAHREN ZUM MARKIEREN VON BAUTEILEN UNTER VERWENDUNG VON ÜBERLAPPENDEN UND DANACH KAUM ÜBERLAPPENDEN LASERPULSEN**
METHOD FOR MARKING COMPONENTS USING OVERLAPPING AND THEN BARELY OVERLAPPING LASER PULSES
PROCEDE DE MARQUAGE DE PIECES AU MOYEN D'IMPULSIONS LASER SE CHEVAUCHANT PUIS SE CHEVAUCHANT A PEINE

(30) Priorität: 05.04.2012 DE 102012205702
(43) Veröffentlichungstag der Anmeldung: 18.03.2015
(73) Patentinhaber: Schaeffler Technologies AG & Co. KG, 91074 Herzogenaurach (DE)
(72) Erfinder: GIESE, Mario, 91336 Heroldsbach (DE)
(86) Internationale Anmeldenummer: PCT/EP2013/052726
(87) Internationale Veröffentlichungsnummer: WO 2013/149747

(56) Entgegenhaltungen:
- WO-A1-2011/076230
- JP-A- H06 269 964
- JP-A- 2002 137 072
- US-A- 5 236 763
- US-A- 5 965 042

## Beschreibung

Die Erfindung bezieht sich auf ein Verfahren zum Markieren von Bauteilen gemäß dem Oberbegriff des Anspruchs 1 (siehe, z.B., US 5 236 763 A). Bei dem Markieren von Bauteilen wird mit einer Vielzahl von Pulsen eines gepulsten Lasers auf eine Oberfläche eines Bauteils die entsprechende Markierung eingebracht. Bei der Markierung kann es sich dabei um eine Beschriftung oder einen Code (Zahlencode oder Strichcode) handeln.

### Hintergrund der Erfindung

Die deutsche Offenlegungsschrift DE 10 2009 048 293 A1 offenbart ein Werkstück, dass mit einer Laserbeschriftung als Sicherheitsmerkmal versehen ist. Die Laserbeschriftung ist mit bloßem Auge erkennbar und unterhalb der Laserbeschriftung ist eine maschinell auslesbare Sicherheitskennzeichnung vorgesehen. Die unterschiedlichen Tiefen im Bauteil werden durch verschiedene Tiefen der Wärmeeindringzonen der Laserstrahlung erreicht und somit geschrieben.

Die deutsche Offenlegungsschrift DE 10 2009 048 291 A1 offenbart ein Verfahren zur bleibenden Markierung eines Werkstücks. Hierzu wird zunächst die Oberfläche des Werkstücks mit einer Laserstrahlung behandelt, welche eine Gefügeänderung im Werkstück bewirkt. Die der Laserstrahlung ausgesetzte Oberfläche wird soweit abgetragen, bis sie optisch zumindest mit bloßem Auge nicht von umgebenden Bereichen der Oberfläche unterscheidbar ist. Es bleibt eine Gefügeänderung in dem Bereich des Werkstücks erhalten, welche die Markierung trägt.

Zum Einbringen einer Laserbeschriftung (Markierung, Kennzeichnung, Sicherheitsmerkmal) in die Oberfläche eines Werkstücks werden oft Kurzpulslaser verwendet. Bei dem Werkstück kann es sich um ein Werkstück handeln, das zumindest eine metallische Oberfläche aufweist. Die Kurzpulslaser, die für die Einbringung der Markierung erforderlich sind, sind sehr teuer und haben aber den Vorteil, dass das Material für die Markierung vollständig und rückstandsfrei verdampft. Handelsübliche Laser und kostengünstigere Laser haben längere Pulse und den Nachteil, dass beim Beschriften das abzutragende Material nicht vollständig verdampft. Es bleibt also ein Auswurf an den Seiten der Markierung, bzw. der Kennzeichnung zurück, der die weitere Verwendung des Werkstücks stören kann.

Aus der DE 40 12 279 A1 ist ein Verfahren zum Markieren von Bauteilen mittels einer Vielzahl von Pulsen eines gepulsten Laserstrahls bekannt. Der Laserstrahl wird dabei auf eine Oberfläche eines Werkstücks gerichtet, bei dem ein Schmelzauswurf an den seitlichen Rändern einer Markierung ausgebildet wird. Um den Schmelzauswurf zu verhindern, wird vorgeschlagen, das Werkstück mit einer Eloxalschicht zu versehen.

Aus der EP 1 333 976 B1 ist bekannt, das Auftreten eines die Ränder einer Markierung umgebende Schmelzauswurfs durch Beschichtung eines Werkstücks mit einer Zinkschicht zu verhindern.

Aus der DE 102 28 743 A1 ist weiterhin bekannt, eine Oberfläche eines Werkstücks mit Hilfe eines gepulsten Laserstrahls zu glätten und zu polieren.

Der Erfindung liegt die Aufgabe zugrunde, ein Verfahren anzugeben, mit dem mittels eines handelsüblichen Lasers eine Markierung eines Bauteils durchgeführt werden kann und dabei gleichzeitig der Schmelzauswurf nach dem Erstellen der Markierung nicht vorliegt.

Die obige Aufgabe wird durch ein Verfahren gelöst, das die Merkmale des Anspruchs 1 umfasst.

Das Verfahren zum Markieren von Bauteilen verwendet eine Vielzahl von Pulsen eines gepulsten Laserstrahls eines Lasers, der auf eine Oberfläche des Bauteils gerichtet ist. Zunächst erfolgt beim Erstellen der Markierung die Ausbildung eines Schmelzauswurfs an den seitlichen Rändern der Markierung. Der gepulste Laserstrahl wird zur Herstellung der Markierung mit einer ersten Geschwindigkeit in Bezug auf das Bauteil verfahren, so dass die einzelnen Pulse des Laserstrahls überlappen. Anschließend erfolgt ein Abtragen des Schmelzauswurfs, wobei der gepulste Laserstrahl mit einer zweiten Geschwindigkeit über den Schmelzauswurf verfahren wird. Dabei überlappen die zeitlich aufeinanderfolgenden Pulse kaum oder nicht.

Letztendlich kann nach dem Abtragen ein anschließendes Anschmelzen der Randbereiche der Markierung durchgeführt werden. Hierzu wird der Laserstrahl defokussiert und mit einer dritten Geschwindigkeit über die Markierung geführt. Dabei wirkt der Laserstrahl gleichzeitig auf die seitlichen Ränder der Markierung ein. Durch die Defokussierung erreicht man eine Reduzierung der Leistung des Laserstrahls pro Flächeneinheit. Auch hier überlappen die zeitlich auseinander folgenden Pulse.

Die dritte Geschwindigkeit beträgt 400 mm/sec. bei einer Pulsfrequenz von 200.000 Hz. Die zweite Geschwindigkeit beträgt 2500 mm/sec. bei einer Pulsfrequenz von 50000 Hertz.

Der Schmelzauswurf wird aus nicht vollständig verdampftem Material des Bauteils beim Erstellen der Markierung gebildet.

Das Bauteil, das mit einer Markierung versehen wird, kann ein Wälzlager sein. Der Schmelzauswurf der Markierung vom Wälzlager wird dabei derart abgetragen, dass die Oberfläche des Wälzlagers weiterhin als Dichtfläche verwendet werden kann.

Die Markierung wird in das Bauteil mit einer Sequenz mehrerer Markierungsschritte bzw. Verfahrensschritte durchgeführt. Zuerst verwendet man Ablationsparameter, mit denen Material verdampft wird. Dabei entstehen Schmelzauswerfungen an den Rändern der Markierung. Zum Ende der Markierung wird eine sog. Reinigungs-Sequenz mit dem Laser durchgeführt. Dabei werden die entstandenen Schmelzauswürfe wieder entfernt, wobei spezielle Reinigungsparameter (Laserung der Außenkontur der Beschriftung mit hoher Vorschubgeschwindigkeit) bei geringer bis keiner Überlappung der Laserpulse und anschließendem Anschmelzen der Oberfläche durchgeführt wird. Beim Anschmelzen der Oberfläche ist der Laserstrahl defokussiert.

Eine besondere Anwendung des erfindungsgemäßen Verfahrens liegt im Markieren bzw. im Beschriften von Lagern, wobei eine lange Haltbarkeit der Beschriftung bzw. Sicherheits-Codierung gefordert wird. Durch das Entfernen des Schmelzauswurfs, wobei letztendlich ein geringer bis kein Schmelzauswurf mehr an der Oberfläche vorliegt, in der die Beschriftung bzw. Markierung angebracht worden ist, kann diese Fläche auch weiterhin als Dichtfläche, falls notwendig, verwendet werden.

Nachfolgend ist die Erfindung anhand eines Ausführungsbeispiels unter Bezugnahme auf die beigefügten Zeichnungen ausführlicher beschrieben. Es zeigen:
- Fig. 1: eine schematische Anordnung eines Lasers, der für die Beschriftung eines Bauteils verwendet wird;
- Fig. 2: eine Draufsicht auf die Oberfläche eines Bauteils, in das eine Markierung mittels sich überschneidender bzw. überlappender Laserpulse eingebracht worden ist;
- Fig. 3: eine schematische Schnittansicht entlang der in Fig. 2 gezeigten Linie A-A, wobei an den seitlichen Rändern der Markierung der Schmelzauswurf vorhanden ist;
- Fig.4: eine Draufsicht auf die Oberfläche des Bauteils, wobei die Ränder mittels nicht überlappender Laserpulse bearbeitet werden, so dass der Schmelzauswurf abgetragen werden kann;
- Fig. 5: eine schematische Schnittansicht der in Fig. 4 gezeigten Linie B-B, der das Resultat des Abtrags des Schmelzauswurfs verdeutlicht; und
- Fig. 6: eine schematische Draufsicht auf die Oberfläche des Bauteils, wobei mittels eines defokussierten und gepulsten Lasers die Ränder der Markierung angeschmolzen werden.

Für gleiche oder gleich wirkende Elemente der Erfindung werden identische Bezugszeichen verwendet. Das dargestellte Ausführungsbeispiel stellt lediglich eine Möglichkeit dar, wie der Schmelzauswurf bei in Bauteilen angebrachten Markierungen entfernt werden kann.

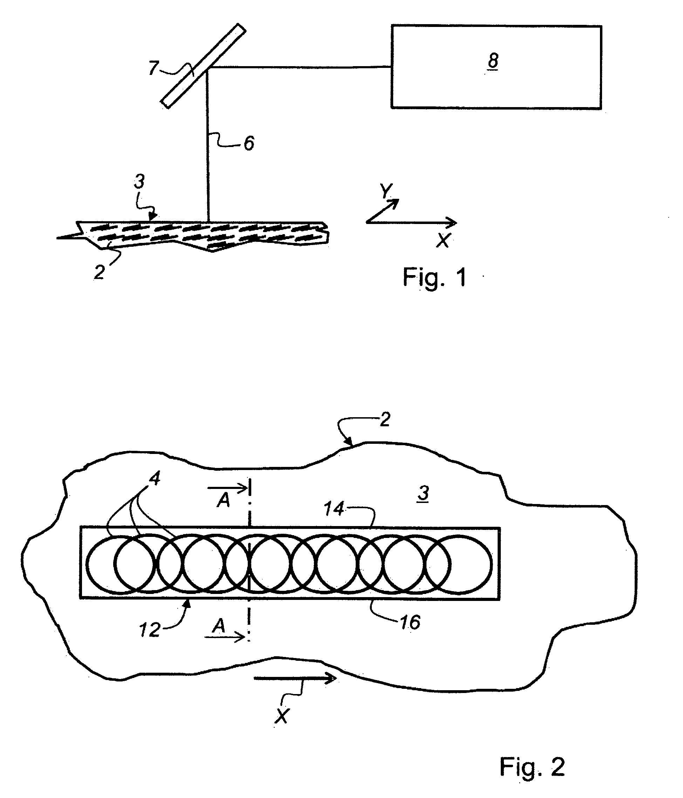

**Fig. 1** zeigt eine schematische Ansicht einer Anordnung, mit der Markierungen, Beschriftungen oder Sicherheitskennzeichnungen in die Oberfläche 3 eines Bauteils 2 eingebracht werden können. Die Anordnung besteht aus einem Laser 8, der einen Laserstrahl 6 aussendet. Der Laserstrahl 6 setzt sich aus einer zeitlichen Abfolge von Laserpulsen zusammen. Mittels einer Scaneinrichtung 7 kann der Laserstrahl über die Oberfläche 3 des Bauteils 2 mit einer bestimmten Geschwindigkeit bewegt werden, um somit die Markierungen oder Kennzeichnungen in beliebiger Form in die Oberfläche 3 des Bauteils 2 einzubringen. Der Laserstrahl lässt sich somit mit der Scaneinrichtung 7 in X-Koordinatenrichtung und in Y-Koordinatenrichtung bewegen.

**Fig. 2** zeigt eine Draufsicht auf einen Ausschnitt der Oberfläche 3 des Bauteils 2. Die Markierung 12 wird dabei mit einer Vielzahl von Laserpulsen 4 in die Oberfläche 3 des Bauteils 2 eingebracht. Die Markierung 12 umfasst somit einen ersten Rand 14 und einen zweiten Rand 16. Mittels der in Fig. 1 dargestellten Scaneinheit 7 werden die Laserpulse mit einer bestimmten Geschwindigkeit, wie in Fig. 2 dargestellt, in X-Koordinatenrichtung bewegt und bilden somit die gewünschte Form der Markierung 12.

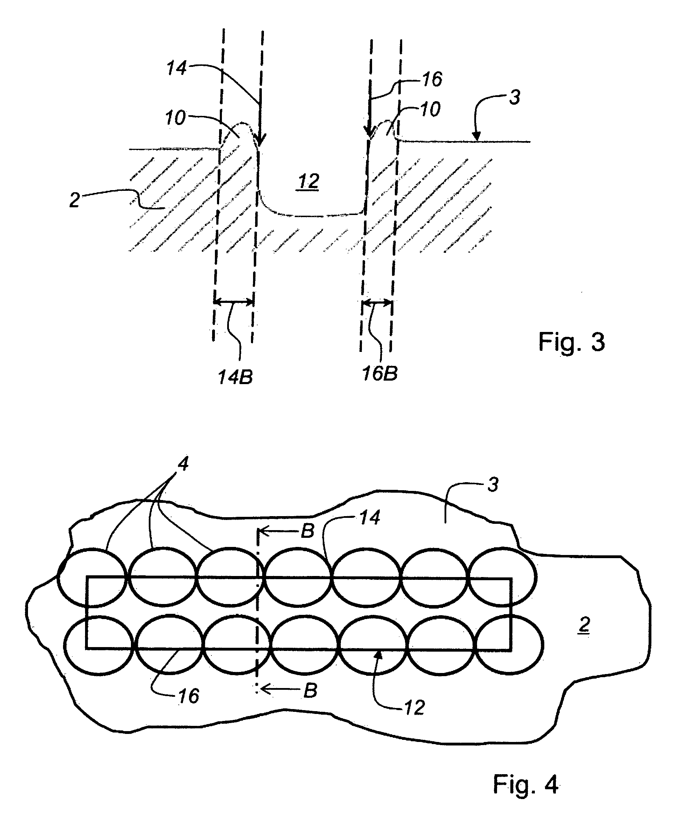

**Fig. 3** zeigt eine Schnittansicht entlang der in Fig. 2 gezeigten Linie A-A. Am ersten Rand 14 und am zweiten Rand 16 ist jeweils ein Schnellauswurf 10 ausgebildet, der sich aufgrund von nicht vollständig verdampften Materials des Bauteils bildet. Der Schmelzauswurf 10 bildet sich an der Oberfläche 3 des Bauteils 2 aus. Der Schmelzauswurf 10 beansprucht somit einen gewissen Randbereich 14B um den ersten Rand 14, bzw. 16B um den zweiten Rand 16.

**Fig. 4** zeigt eine schematische Draufsicht auf die Oberfläche 3 des Bauteils 2, wobei das Abtragen des Schmelzauswurfs 10 aus Fig. 3 durchgeführt wird. Der gepulste Laserstrahl wird mit einer zweiten Geschwindigkeit, welche größer als die erste Geschwindigkeit ist, entlang der Randbereiche 14B und 16B verfahren. Dabei ist die Geschwindigkeit, welche mit der Scaneinrichtung 7 eingestellt werden kann, derart bemessen, dass sich die einzelnen zeitlich aufeinanderfolgenden Pulse 4 des Laserstrahls 6 nicht überlappen oder nur sehr gering überlappen.

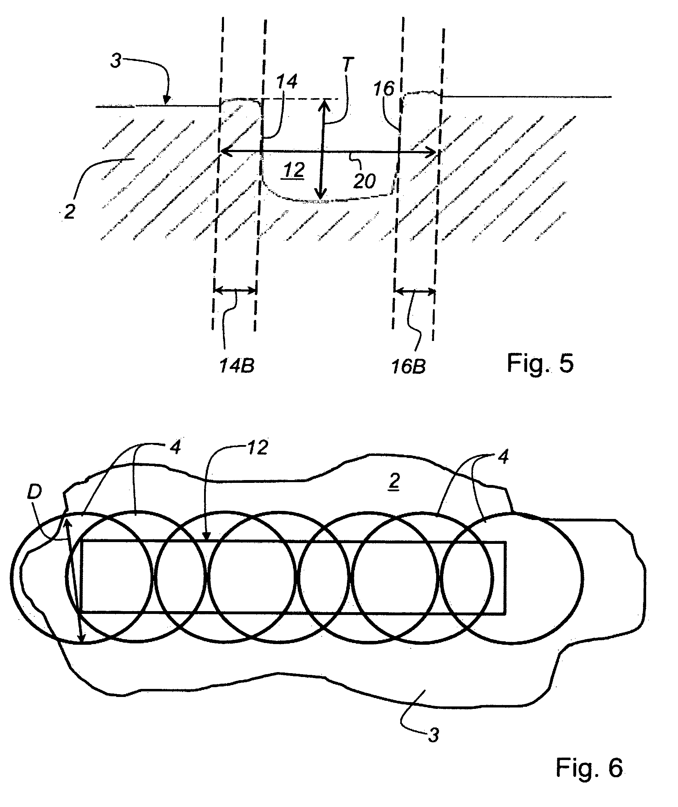

**Fig. 5** zeigt eine Querschnittansicht entlang der in Fig. 4 gezeigten Linie B-B. Durch das Abtragen des Schmelzauswurfs 10 wird erreicht, dass sich der Schmelzauswurf 10 fast auf das Niveau der Oberfläche 3 des Bauteils 2 zurückbildet. In einem letzten Schritt kann, wie in **Fig. 6** dargestellt, ein Anschmelzen der Randbereiche 14B und 16B durchgeführt werden. Hierzu wird der Laserstrahl 6 defokussiert und die einzelnen Laserpulse 4 mittels einer dritten Geschwindigkeit über die ausgebildete Markierung 12 verfahren. Die Defokussierung des Laserstrahls 6 ist dabei derart bemessen, dass der Durchmesser D des defokussierten Laserstrahls 6 größer ist, als der Abstand 20 zwischen den Randbereich 14B zum dem Randbereich 16B.

Die mit dem Laser eingebrachte Markierung 12 soll in einigen Anwendungsbereichen eine Tiefe T von 10 µm besitzen, wobei der Schmelzauswurf 10 maximal 1 µm betragen darf. Das erfindungsgemäße Verfahren verwendet verschiedene Parameter, mit denen die Oberfläche 3 des Werkstücks, bzw. Bauteils 2 bearbeitet wird. Durch die Sequenz von Tiefengravur (Einbringen der Markierung 12) und einer anschließenden Reinigung mittels Laser 8 erhält man eine Außenkontur, bei der der Auswurf entfernt worden ist. Die Reinigung mittels Lasers 8 erfolgt ebenfalls mittels spezieller Reinigungsparameter. Nachdem der Schmelzauswurf 10 entfernt worden ist, wird eine gute Lesbarkeit der eingebrachten Markierung 12 bzw. Tiefengravur beibehalten. Für diese Markierung 12 bzw. Tiefengravur kann man auch nach längerer Lebensdauer des Werkstücks bzw. Bauteils 2 eine höhere Wahrscheinlichkeit der Lesbarkeit sicherstellen. Die Fälschungssicherheit, auch nach längerer Lebensdauer z. B. eines Lagers, ist somit gewährleistet.

## Patentansprüche

1. Verfahren zum Markieren von Bauteilen (2) mittels einer Vielzahl von Pulsen (4) eines gepulsten Laserstrahls (6) eines Lasers (8), der auf eine Oberfläche des Bauteils (2) gerichtet ist, **gekennzeichnet durch** die folgenden Schritte:
• Bilden eines Schmelzauswurfs (10) beim Erstellen der Markierung (12) an deren seitlichen Rändern (14, 16), wobei der gepulste Laserstrahl (6) während dem Erstellen der Markierung (12) mit einer ersten Geschwindigkeit (V₁) in Bezug auf das Bauteil (2) verfahren wird, so dass die Pulse (4) überlappen;
und **gekennzeichnet durch** folgenden Schritt:
• Abtragen des Schmelzauswurfs (10) wobei der gepulste Laserstrahl (6) mit einer zweiten Geschwindigkeit (V₂) über dem Schmelzauswurf (10) verfahren wird, dass zeitlich aufeinander folgende Pulse (4) kaum oder nicht überlappen.

2. Verfahren nach Anspruch 1, wobei nach dem Abtragen ein anschließendes Anschmelzen von Randbereichen (14B, 16B) der Markierung (12) erfolgt, wobei der Laserstrahl (6) defokussiert wird und mit einer dritten Geschwindigkeit (V₃) gleichzeitig über die seitlichen Ränder (14, 16) der Markierung (12) geführt wird.

3. Verfahren nach Anspruch 2, wobei die dritte Geschwindigkeit (V₃) 400 mm/s bei einer Pulsfrequenz von 200.000 Hz beträgt.

4. Verfahren nach einem der Ansprüche 1 bis 3, wobei die zweite Geschwindigkeit (V₂) 2500 mm/s bei einer Pulsfrequenz von 50.000 Hz beträgt.

5. Verfahren nach einem der Ansprüche 1 - 4, wobei der Schmelzauswurf (10) aus nicht vollständig verdampftem Material des Bauteils (2) beim Erstellen der Markierung (12) gebildet wird.

6. Verfahren nach einem der Ansprüche 1 - 5, wobei das Bauteil (2) ein Wälzlager ist, das mit der Markierung (12) versehen wird.

7. Verfahren nach Anspruch 6, wobei der Schmelzauswurf (10) der Markierung (2) am Wälzlager derart abgetragen wird, dass die Oberfläche (3) des Wälzlagers weiterhin als Dichtfläche verwendet werden kann.

## Claims

1. Method for marking components (2) by means of a multiplicity of pulses (4) of a pulsed laser beam (6) of a laser (8), which is directed onto a surface of the component (2), **characterized by** the following steps:
• forming a melt burr (10) at side edges (14, 16) of the marking (12) while it is being created, wherein, during the creation of the marking (12), the pulsed laser beam (6) is moved with respect to the component (2) at a first speed (V₁), so that the pulses (4) overlap;
and **characterized by** the following step:
• removing the melt burr (10), wherein the pulsed laser beam (6) is moved over the melt burr (10) at a second speed (V₂), that successive pulses (4) barely overlap or do not overlap.

2. Method according to Claim 1, wherein, after the removal, edge areas (14B, 16B) of the marking (12) are then incipiently melted, wherein the laser beam (6) is defocused and at the same time guided over the side edges (14, 16) of the marking (12) at a third speed (V₃).

3. Method according to Claim 2, wherein the third speed (V₃) is 400 mm/s at a pulse frequency of 200 000 Hz.

4. Method according to one of Claims 1 to 3, wherein the second speed (V₂) is 2500 mm/sec at a pulse frequency of 50 000 Hz.

5. Method according to one of Claims 1-4, wherein the melt burr (10) is formed by material of the component (2) that has not evaporated completely when the marking (12) was created.

6. Method according to one of Claims 1-5, wherein the component (2) is a roller bearing that is provided with the marking (12).

7. Method according to Claim 6, wherein the melt burr (10) of the marking (2) on the roller bearing is removed in such a way that the surface (3) of the roller bearing can still be used as a sealing surface.

## Revendications

1. Procédé de marquage d'éléments structuraux (2) au moyen d'une pluralité d'impulsions (4) d'un rayon laser pulsé (6) d'un laser (8) qui est dirigé sur une surface de l'élément structural (2), **caractérisé par** les étapes suivantes :
* formation d'une projection de matière fondue (10) lors de la création du marquage (12) sur ses bords latéraux (14, 16), le rayon laser pulsé (6) étant déplacé par rapport à l'élément structural (2) pendant la création du marquage (12) à une première vitesse (V₁) de sorte que les impulsions (4) se chevauchent ; et
**caractérisé par** l'étape suivante :
* enlèvement de la projection de matière fondue (10), le rayon laser pulsé (6) étant déplacé à une deuxième vitesse (V₂) au-dessus de la projection de matière fondue (10), que les impulsions (4) qui se suivent chronologiquement ne se chevauchent qu'à peine ou pas du tout.

2. Procédé selon la revendication 1, selon lequel l'enlèvement est suivi par une fusion des zones de bordure (14B, 16B) du marquage (12), le rayon laser (6) étant défocalisé et guidé avec une troisième vitesse (V₃) simultanément au-dessus des bords latéraux (14, 16) du marquage (12).

3. Procédé selon la revendication 2, selon lequel la troisième vitesse (V₃) est de 400 mm/s avec une fréquence d'impulsions de 200 000 Hz.

4. Procédé selon l'une des revendications 1 à 3, selon lequel la deuxième vitesse (V₂) est de 2500 mm/s avec une fréquence d'impulsions de 50 000 Hz.

5. Procédé selon l'une des revendications 1 à 4, selon lequel la projection de matière fondue (10) est constituée du matériau non entièrement évaporé de l'élément structural (2) lors de la création du marquage (12).

6. Procédé selon l'une des revendications 1 à 5, selon lequel l'élément structural (2) est un palier à roulement qui est pourvu du marquage (12).

7. Procédé selon la revendication 6, selon lequel la projection de matière fondue (10) du marquage (2) sur le palier à roulement est enlevée de telle sorte que la surface (3) du palier à roulement peut continuer d'être utilisée comme une surface d'étanchéité.
